# EUROPEAN PATENT APPLICATION

(11) **EP 4 212 266 A1**
(43) Date of publication of application: **19.07.2023**
(21) Application number: 22151509.1
(22) Date of filing: 14.01.2022
(51) Int. Cl.: B22F 3/03, B22F 3/14, C22C 29/10, E21B 10/46, B23B 51/02, B23P 15/32, B22F 5/00

(54) **DRILL BIT TIP AND DRILL WITH DRILL BIT TIP, MOLD AND METHOD FOR MANUFACTURING DRILL BIT TIP**

(71) Applicant: Drill Holding ApS, 4622 Havdrup (DK)
(72) Inventor: Bauer, Bent, 4592 Sejerø (DK); Bauer, Kim, 3660 Stenløse (DK)
(74) Representative: Nordic Patent Service A/S

(57) **Abstract**

A method and mold for manufacturing a drill-bit tip plate (40) for forming the tip of a twist drill bit (100), and atrial-bit tip plate (40) manufactured by the method. the method comprises by providing a sintering mold (1) comprising a first punch (20), a second punch (30) and a sintering die (10), the sintering die (10) having a channel (13) with a cross-sectional shape that corresponds to the cross sectional shape of the first punch (20) and second punch (30), the second punch (30) having a distal end (35) corresponding to a negative shape of the tip front end (47) and the first punch (20) having a distal end that corresponds to the negative shape of the tip rear end (48); providing an amount of sintering powder (60) to be compacted in the channel (13) and applying a force to the first punch (20) and the second punch (30) to sinter the sintering powder (60) into the tip (40), and ejecting the tip (40) from said sintering die (10) by pushing the second punch (30) into the channel (13) at least until the tip (40) is ejected from said channel (13). A drill-bit tip plate (40) with a first and a second apex (45,46) distanced from an axis of rotation (X) and having inner and outer cutting edges (42,43,65,66) with the first-and second apex (45,46) being distanced from the broad sides (58,59) of the geo-bit tip plate (40).

It is suggested that Fig. 5 is published with the abstract.

## Description

### TECHNICAL FIELD

The present disclosure relates to a drill bit tip and drill with drill bit tip, a method of manufacturing a tip for forming the tip of a drill bit and to a sintering mold for manufacturing a drill bit tip.

### BACKGROUND

Drill bits are cutting tools used to drill holes. The twist drill bit that is used for drilling cylindrical holes is one of the most common types of drill bits. Twist drill bits normally comprise a shank, designed to be gripped by the drill chuck and a drill bit body. The twist drill bit comprises a cutting point at the tip of a cylindrical shaft with helical flutes. The flutes act as an Archimedean screw and lift swarf out of the hole.

Some twist drill bits are made of one type and piece of material, whilst other drill bits are composite articles, in which a drill bit tip is attached to the tip of the drill bit. Twist drill bits come in many different sizes and shapes and can create holes in different kinds of materials. Twist drill bits are normally attached to a drill, which powers them to cut through a workpiece by rotation. The drill is designed to grip the shank (the proximal end) of the twist drill bit in its chuck. Twist drill bits typically have standard sizes defined by the diameter of the bit in terms of standard metric lengths varying from 0.2 mm to 25.0 mm.

Twist drill bits are typically made of hard materials, depending on the required application. Tungsten carbide (WC) and other carbides are extremely hard materials and are therefore extremely resistant to wear and abrasion. However, Tungsten carbide is difficult and expensive to machine and more brittle than e.g. steel, hence not suitable for the main body (shank) of the drill bit and WC tips are therefore mostly used for drill bit tips for mason drill bits. Tungsten carbide drill bit tips are typically brazed onto the tip of the shank of a drill bit after production of the tip.

The drill bit body normally comprises a spiralled flute and the tip. The spiral flute controls the chip removal, thus fast or low spirals are designed to be used on different materials. The functional length of the drill bit determines how deep a hole can be drilled and also determines the stiffness of the drill bit and accuracy of the resultant hole.

The angle formed at the tip of the bit, commonly called as the point angle is determined by the material the bit will be operating in. Harder materials require a larger point angle and softer material require a sharper angle. The correct point angle for the hardness of the material influences wandering, chatter, hole shape, and wear rate. The lip angle determines the amount of support provided to the cutting edge. A greater lip angle will case the bit to cut more aggressively under the same amount of point pressure as a bit with a smaller lip angle, however both conditions can cause binding, wear and catastrophic failure of the tool. Thus, careful engineering of drill bits and drill bit tips is required to manufacture drill bits that not only last over a long period of time but can also be used to drill through a variety of materials.

Masonry drill bit tips are typically made of tungsten carbides and are used to drill holes in brick, solid concrete, concrete blocks and breeze blocks. They are available in sizes from just under 5 mm to approx. 40 mm and typically are used with impact, hammer or percussion drills, providing a percussive or hammering action, which pulverizes the masonry in contact with the tip of the bit. Typically, such drill bits have tips with blunt cutting edges for crushing the material to be removed as opposed to cutting the material to be removed and they typically have a large point angle due to the hard materials masonry drill bits tips are applied to. There are also drill bit tips made tungsten carbides that are used to drill holes in tiles, that are sharp edged since the use of percussive or hammering action would destroy the tile. These drill bit tips have a sharp edge and the cut the material as opposed to the before mentioned type of drill bit that crushes the material. Most known drill bits tips have two flanks that define two cutting edges, the two flanks meeting at a radially extending chisel edge that is arranged in the point angle.

Tungsten carbon drill bit tips are manufactured according to one method by mixing tungsten oxide with graphite (carbon) to obtain a mixture in the form of a powder. This powder is pressed to shape and then sintered, and a chemical reaction occurs that removes the oxygen from the tungsten oxide and combines the carbon with the tungsten to yield tungsten carbide.

GB2330787B describes a method of manufacturing rotary drill bits by forming at least a portion of the bit body from a precipitation hardening allow and brazing cutters to the bit body by a heating and cooling cycle.

GB2342876B describes method of manufacturing rotary drill bits by a powder metallurgy process using a particulate matrix-forming material and a molten binding alloy in a mould.

WO2012128708A1 relates to a method of preparation of an FGM shape preferably using spark plasma sintering (SPS).

These known manufacturing methods all result in a tip which has cutting edges, as can be found in any hardware shop. This is not a problem when drilling in mason due to the brittle nature of mason that allows it to be mostly crushed instead of cut. However, this limits the use of drill bits with a WC tip to mason and renders them unsuitable for drilling in e.g. metal or wood.

### SUMMARY

It is an object to provide a method and apparatus for manufacturing a tip of a drill bit that overcomes or at least reduces the problems mentioned above.

The foregoing and other objects are achieved by the features of the independent claims. Further implementation forms are apparent from the dependent claims, the description and the figures.

According to a first aspect, there is provided a method for manufacturing a tip for forming the tip of the body of a drill bit, wherein the tip comprises a front end and a rear end, the front end forming the cutting edge, the method comprising: providing a sintering mold, the sintering mold comprising a first punch, a second punch and a sintering die, the sintering die having a channel with a cross-sectional shape that corresponds to the cross sectional shape of the first punch and second punch, the channel extending through the sintering die and the channel opening to opposite sides of the sintering die, the second punch having a distal end corresponding to a negative shape of the tip front end, the first punch having a distal end that corresponds to the negative shape of the tip rear end, inserting either the first punch or the second punch partially into the channel, providing an amount of sintering powder to be compacted in the channel of the sintering die, thereupon inserting the other of the first punch and the second punch partially into the channel, thereupon applying a force to the first punch and the second punch urging both the first punch and the second punch towards one another to apply pressure to the sintering powder there between to sintering the sintering powder into the tip, and thereupon ejecting the tip from the sintering die by pushing the second punch into the channel at least until the tip is ejected from the channel.

The inventors have discovered that by providing a first punch which corresponds to the negative shape of the tip rear end and by providing a second punch which corresponds to the negative shape of the tip front end and by ejecting the produced tip from the sintering die by pushing the second punch into the channel of the die, a tip can be manufactured with sharp cutting edges, i.e. without the need for subsequently sharpening the cutting edges. Thus, the resulting tip can be used in a drill bit that can be used for drilling in metal, plastic, wood and other materials that require a sharp cutting edge, and still be produced economically since the drill beats are ejected from the mold with sharp edges and a relatively expensive sharpening process that was required with conventional production methods for obtaining sharp edges can be avoided.

In a possible implementation form of the first aspect the method comprising retracting the first punch before or during the ejection of the tip.

By retracting the first punch before or during the ejection of the tip it becomes possible to quickly remove the tip from the sintering mold and to speed up the tip manufacturing process.

In a possible implementation form of the first aspect, the second punch has a longitudinal extent that is greater than a longitudinal extent of the channel, thus allowing the ejection of the tip with sharp cutting edges.

In a possible implementation form of the first aspect, the cutting edge of the tip comprises at least one groove.

By having at least one groove, a drill bit with a considerably high drilling rate than conventional drills can be obtained at the same load. Alternatively, a similar drilling rate may be obtained using a lower load. Additionally, it becomes possible to drill deeper at the same pressure and at the same rotational speed i.e. at the same drilling late while reducing the risk of the drill bit getting stuck in the material which happens when the cutting edge is 'too sharp' for the material.

In a possible implementation form of the first aspect, the method further comprises heating the sintering powder, preferably in the channel, to at least partial liquefaction.

In a possible implementation form of the first aspect, the method comprises applying pressure on the first punch and the second punch using a hydraulic press.

In a possible implementation form of the first aspect, the sintering powder comprises tungsten carbide powder.

In a possible implementation form of the first aspect, the metallic powder comprises Wolfram Oxide.

In a possible implementation form of the first aspect, the method comprising liquid phase sintering, or electric current assisted sintering.

In a possible implementation form of the first aspect, the sintering die comprises at least one cavity, which at least one cavity is formed in the channel between the distal end of the first punch and the distal end of the second punch.

By forming a cavity in the channel between the distal end of the first punch and the distal end of the second punch it becomes possible to completely enclose the sintering powder within the cavity and to apply pressure which will compact the sintering powder into a dense bulk.

In a possible implementation form of the first aspect, the second punch has a length that exceeds the length of the channel.

By having a second punch with a length exceeding the length of the channel, it becomes possible to allow the second punch to be used as an ejector for the tip, thus allowing for economical production of drill bit tips with sharp cutting edges straight out of the mold.

In a possible implementation form of the first aspect, the distal end of the second punch comprises at least one groove and at least one ridge.

By having a second punch comprising at least one groove and at least one ridge it becomes possible to imprint a groove and a ridge onto the tip front end, thus creating, grooves and sharp edges on the tip.

According to a second aspect, there is provided a drill bit tip obtained by the method according to any one of the preceding aspects.

According to a third aspect, there is provided a sintering mold for manufacturing a tip of a drill bit, wherein the tip comprises a front end and a rear end, the front end forming the cutting edge,
the sintering mold comprising a first punch, a second punch and a sintering die,
the sintering die having a channel with a cross-sectional shape that corresponds to the cross sectional shape of the first punch and second punch and a longitudinal extend,
the channel extending through the sintering die and the channel opening to opposite sides of the sintering die, the second punch having a distal end corresponding to a negative shape of the tip front end,
the first punch having a distal end that corresponds to the negative shape of the tip rear end,
characterized in that the second punch has a longitudinal extent that is greater than the longitudinal extent of the channel.

By providing a second punch with a greater length than the channel and by providing a second punch with a distal end corresponding to the negative shape of the tip front end it becomes possible to imprint a shape to the tip front end while allowing for ejection of the tip from the mold with sharp cutting edges.

According to a fourth aspect there is provided drill-bit tip plate for mounting on the shank of a twist drill bit, the bit tip drill plate having an axis of rotation X, an overall width W between first- and second short sides, and overall height H between front- and rear ends, and an overall thickness T between first- and second broad sides, the bit tip drill plate comprises:
a first outer relief face and a first outer rake face connected to a first outer cutting edge, the first outer cutting edge extends to a first apex,
a second outer relief face and a second outer rake face connected to second outer cutting edge, the second outer cutting edge extends to a second apex,
a first inner relief face and the first outer rake face connected to a first inner cutting edge, the first inner cutting edge extends to the first apex, and
a second inner relief face and the second outer rake face connected to a second inner cutting edge, the second inner cutting edge extends to the second apex,
the first- and second inner cutting edges each having an equal acute angle ζ with the axis of rotation X, the acute angle ζ being between 0 and 14 degrees,
the first outer relief face and the first inner relief face each connecting to the first broad side and to one another along a first edge that extends to the first apex,
the second outer relief face and the second inner relief face each connecting to the second broad side and to one another along a second edge that extends to the second apex,
the first apex and the second apex being equally distanced from the axis of rotation X by a first distance d1,
wherein the first apex is distanced from the second broad side by a second distance d2 and the second apex is distanced from the first broad side by the second distance d2.

According to a possible implementation form of the first aspect, the second distance d2 is measured in the same direction as the extent of set thickness T

According to a possible implementation form of the first aspect, the second distance d2 is less than 75% of the thickness T, preferably less than 66% of the thickness T, even more preferable 50% or less of the thickness T.

According to a possible implementation form of the first aspect, to any one of the preceding claims, wherein the acute angle ζ being between 4 and 10 degrees, preferably between 6 and 8 degrees and most preferable approximately 7 degrees.

According to a possible implementation form of the first aspect, the second distance d2 is measured in a direction perpendicular to the first- and second broad side.

According to a possible implementation form of the first aspect, the first distance d1 is measured in a direction perpendicular to the first- and second side.

According to a possible implementation form of the first aspect, the first outer rake face connects to a first associated release surface, and wherein the first associated release surface connects to the first broad side to form a first recess, the first associated release surface preferably being beveled, and wherein the second outer rake face connects to a second associated release surface 69, and wherein the second associated release surface connects to the second broad side to form a second recess, the second associated release surface preferably being beveled.

According to a possible implementation form of the first aspect, the first outer rake face is parallel with the second outer rake face.

According to a possible implementation form of the first aspect, the first outer rake face and the second outer rake face coincide with one and the same plane.

According to a possible implementation form of the first aspect, the first outer cutting edge and the second outer cutting edge, form an acute tip angle between 115 and 145 degrees, preferably between 125 and 135 degrees, most preferable approximately 130 degrees.

According to a possible implementation form of the first aspect, the first and relief surface and the second and relief surface have an acute cutting angle relative to a flat plane that is arranged at right angle to the axis of rotation X of 15 to 25 degrees, preferably 18 to 22 degrees, most preferable approximately 20 degrees.

According to a possible implementation form of the first aspect the drill bit tip plate comprises a first peripheral groove in the first outer relief face the first peripheral groove extending between the first outer rake face and the first broad side, a centerline of the first peripheral groove having a third radial distance d3 to the axis of rotation X,
a second peripheral groove in the second outer relief face the second peripheral groove extending between the second outer rake face and the second broad side, a centerline of the second peripheral groove having a fourth radial distance d4 to the axis of rotation X, the fourth radial distance d4 being greater than the first radial distance d3, the fourth radial distance d4 preferably being greater than the first radial distance d3 by at least amount that is greater than a greatest width of the first peripheral groove.

According to a possible implementation form of the first aspect, the first peripheral groove forms a first peripheral V- or U-shaped cutting edge 85 at the connection between the first peripheral groove and the first rake face, each of the legs of the first peripheral V-or U-shaped cutting edge 85 preferably being arranged at the acute angle ζ with the axis of rotation X, and
wherein the second peripheral groove forms a second peripheral V- or U-shaped cutting edge at the connection between the second peripheral groove and the second rake face, each of the legs of the second peripheral V-or U-shaped cutting edge preferably being arranged at the acute angle ζ with the axis of rotation X.

According to a possible implementation form of the first aspect, the first peripheral groove widens in the direction from the first outer rake face towards the first broad side.

According to a possible implementation form of the first aspect, the first, second, third and fourth cutting edges are straight cutting edges.

According to a possible implementation form of the first aspect, the first and/or second short side is arranged at a straight angle to the broad sides.

According to a possible implementation form of the first aspect, the first and/or second short side has a convex shape, preferably with a convexity that corresponds to the radial distance of the first- and/or second short side, to the axis of rotation X.

According to a possible implementation form of the first aspect, the drill-bit tip plate is of carbide material, preferably tungsten carbide material.

According to a possible implementation form of the first aspect, the first edge forms an acute angle Z with the first cutting edge and the second edge forms an acute angle Z with the second cutting edge, the acute angle Z being between 80 and 94 degrees and, preferably between 84 and 90 more preferable between 86 and 88 degrees, and most preferable approximately 87 degrees.

According to a possible implementation form of the first aspect, the bit tip has a plate like shape.

According to a fifth aspect there is provided a twist drill-bit comprising a drill-bit tip plate according to the fourth aspect or any possible implementations thereof, preferably comprising a shank with the drill-bit tip plate brazed onto the tip of the shank.

These and other aspects will be apparent from and the embodiment(s) described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Figs. 1a-1c illustrates a mold and a method for forming a tip in accordance with an embodiment;
Fig. 2 shows an elevated view of the sintering mold comprising the sintering die and a first and second punch of Figs 1a to 1c;
Fig. 3 shows a top view of the second punch of Figs 1a to 1c;
Fig. 4 shows a top view of the sintering die of Figs 1a to 1c,
Fig. 5 shows an elevated view of a tip in accordance with an embodiment;
Fig. 6 is a side view of the tip of Fig. 5;
Fig. 6a shows an enlarged detail of Fig. 6;
Fig. 7 to 9 are side and elevated views of the tip of Fig. 5;
Fig. 10 is an elevated view of a tip in accordance with an embodiment;
Figs. 12 to 14 are views along the axis of rotation of tips in accordance with different embodiments;
Fig. 12a shows an enlarged detail of Fig. 12;
Fig. 15 shows the side view of a tip in accordance with an embodiment;
Fig. 16 shows a side view of the tip of Fig. 15;
Fig. 17 is a side view on the tip of Fig. 15 from another isometric angle;
Fig. 18 is a view along the axis of rotation of the tip of Fig. 15;
Fig. 19 is an elevated view of an embodiment of a drill bit with a tip according to the embodiment of Figs. 20 to 24;
Fig. 20 is a side view on the narrow side of a tip according to an embodiment;
Fig. 21 is an elevated view of the tip of Fig. 20 installed on a shank of the drill bit of Fig. 19;
Fig. 22 is a side view on the narrow side of the tip of Fig. 20 installed on a shank of the drill bit of Fig. 19;
Fig. 23 is another elevated view of the tip of Fig. 20 installed on a shank of the drill bit of Fig. 19;
Fig. 24 shows the view along the axis of rotation of the tip of Fig. 20 installed on a shank of the drill bit of Fig. 19;
Fig. 25 is a side view on a tip of Fig. 20;
Fig. 26 shows the view along the axis of rotation of the tip of Fig. 20;
Fig. 27 is an elevated cut open view of a hole drilled with the tip of Fig. 20 with the tip in a drilling position, and
Fig. 28 is an elevated cut open view of a hole drilled with the tip of Fig. 20 with the tip withdrawn from the drilling position.

### DETAILED DESCRIPTION

In the present discourse, the term 'drill' is used for denoting a tool for powering a drill bit for making round holes. The term 'drill bit' is used to describe the cutting tool used to remove material to create holes. The drill bit typically has a shank 90 that is grasped in the chuck of the drill. The drill bit has a tip 40 made of a harder material, (often tungsten carbide) than the shank. These, typically tungsten carbide, tips 40 are typically brazed onto the drill bit after production of the tip.

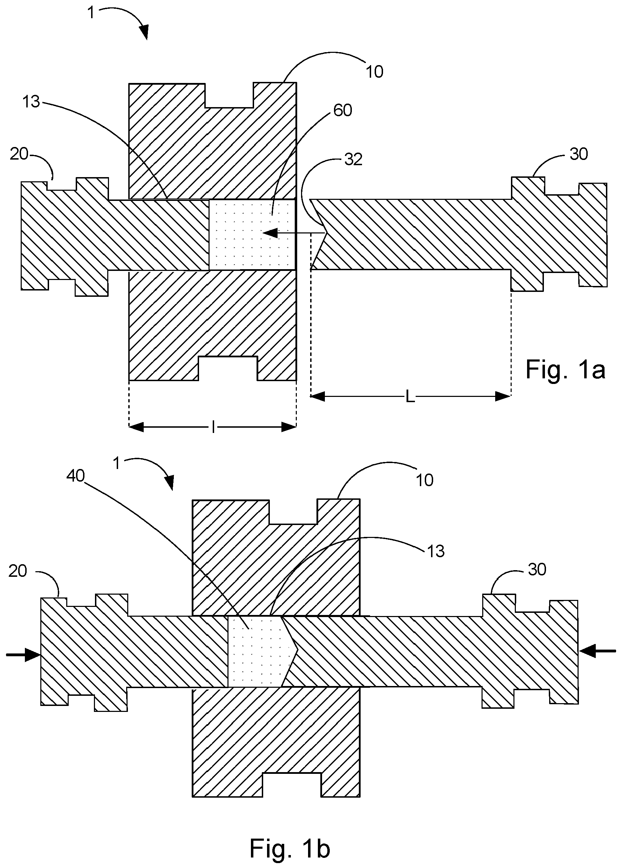

Figs. 1a to 1c show the method of forming a drill-bit tip plate 40 in accordance with an embodiment. A sintering mold 1 is provided, comprising a sintering die 10, a first punch 20 and a second punch 30.

The sintering die 10 comprises a channel 13 which channel 13 has the cross-sectional shape that corresponds to the cross-sectional shape of the first 20 and second 30 punch to allow for insertion of the first 20 and second 30 punches into the channel 13. The channel 13 extends all the way through the sintering die 10, opening to opposite sides of the sintering die 10 to allow for insertion of the first 20 and second 30 punches from opposing ends. The second punch 30 has a longitudinal extent L that is greater than the longitudinal extent 1 of the channel 13. The first punch 20 has a distal end (22) that corresponds to a negative shape of the tip front end rear 48. The second punch 30 has a distal (32) end which corresponds to a negative shape of the tip front end 47.

When executing the method in a first step (Fig. 1a), either the first punch 20 or second punch 30 is partially inserted into the channel 13 of the sintering die 10.

Sintering powder 60 is then added to be compacted in the channel 13 of the sintering die 10. The sintering powder 60 may be e.g. metal powder, ceramics, plastics, carbon and other materials, or a mixture thereof. In an embodiment, the powder comprises tungsten oxide and carbon, preferably, a mixture of tungsten oxide powder and carbon powder. The sintering powder 60 may also be a carbide, for example tungsten carbide or cemented carbide.

The other of the first punch 20 and second punch 30 is thereafter inserted partially into the channel 13 to enclose the sintering powder 60 to be compacted in a cavity of the sintering die 10.

A force is applied to the first 20 and second 30 punch as demonstrated on Fig 1b, urging both the first 20 and second 30 punches towards one another to apply high pressure to the sintering powder to sinter the powder 60 into the tip 40. The force may be applied by any known conventional methods, e.g. by using a hydraulic press.

The sintering may comprise liquid phase sintering, electric current assisted sintering or spark plasma sintering or any other suitable sintering methods known in the art of sintering.

The temperature may be raised to assist the sintering process and any known suitable conventional temperatures may be used.

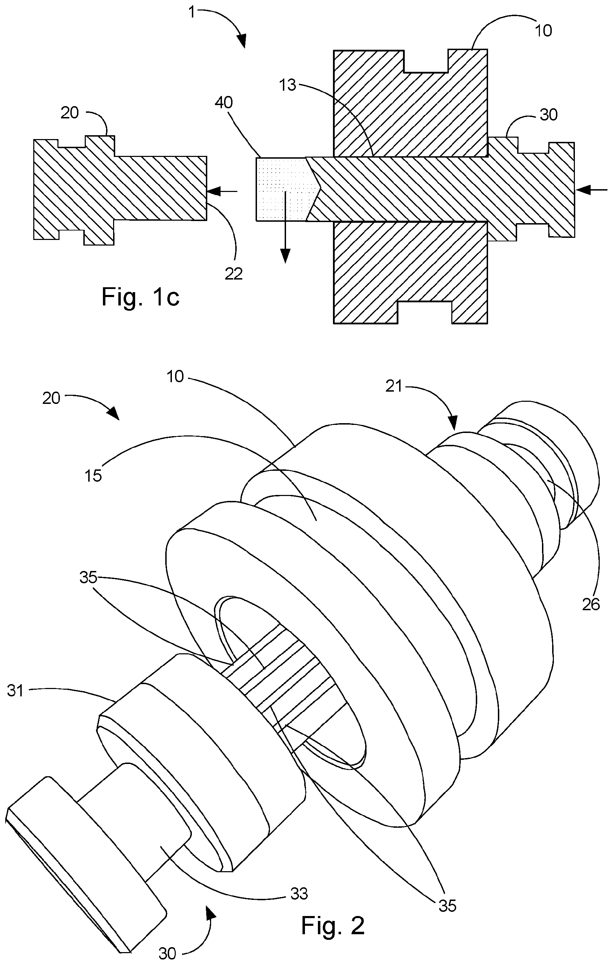

After completion of the sintering step, the tip 40 is ejected from the sintering die 10 by pushing the second punch 30 into the channel 13 at least until the tip 40 is ejected from the channel 13 as illustrated in Fig. 1c. The first punch 20 may also be retracted before or during the ejection of the tip 40, but it may also be pushed out of the channel 13 simultaneously by pushing the second punch 30 into the channel 13.

Ejection of the sintered tip 40 is possible since the second punch 30 has a longitudinal extent L that is greater than the longitudinal extent 1 of the channel 13. This is advantageous, since it allows the economical production of drill bit tips, since the tip 40 is ejected from the mold with sharp edges and a relatively expensive sharpening process that was required with conventional production methods for obtaining sharp edges can be avoided.

Fig. 2 shows an elevated view of the sintering mold 1 comprising the sintering die 10 and a first 20 and second 30 punch in accordance with an embodiment.

The first punch 20 comprises a common drive 21 which comprises the distal end of the first punch 20, which is configured to be corresponding to the negative shape of the tip rear end. The first punch 20 further comprises a groove 26 configured on the proximal end of the first punch 20 for securing the mold 1 in a tool for sintering.

The second punch 30 comprises a common drive 31 which comprises the distal end 35 of the first punch 30, which is configured to be corresponding to the negative shape of the tip end. The second punch 30 further comprises a groove 33 configured on the proximal end of the second punch 30 for securing the mold 1 in a tool for sintering.

A plurality of punches 35 is secured to the distal end of the common drives 21, 31 with a space between the respective punches. The space between the respective punches 35 correspond to the space between the individual channels 13 in the sintering die 10 to allow insertion of the punches 35 into the sintering die 10.

The first punch 20 and second punch 30 are both inserted to the sintering die 10 from opposing ends as illustrated on Fig. 2. The sintering die 10 further comprise a groove 15 on the outer circumference of the die 10 for securing the sintering die 10 in a tool for sintering.

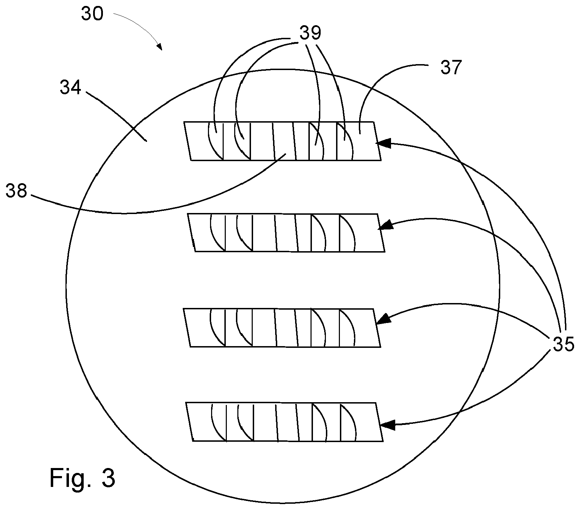

Fig. 3 shows a top view of the second punch 30 in accordance with an embodiment comprising four punches 35 for forming the front end 47 of tip 40. The second punch 30 comprises a punch body 34, from which punches 35 extend forming the distal end of the second punch 30.

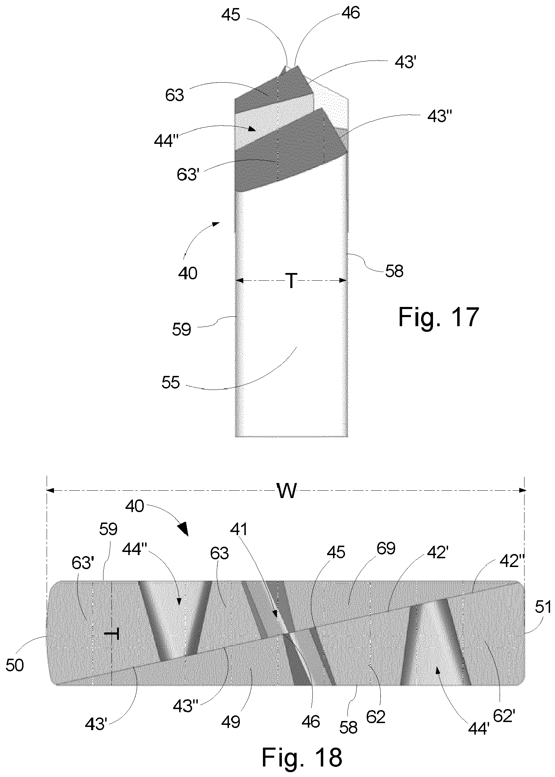

The distal end of the punches 35 comprise grooves 39 and ridges 37, corresponding to the negative shape of the tip front end 47. As illustrated of Fig. 18, the second punch 30 may comprise four punches 35, however other suitable configurations are also possible.

It is understood that the first punch 20 has a similar configuration regarding the punches for forming the rear end 48 of a tip 40, however the distal end of the first punch 20 corresponds to the negative shape of the tip rear end 48. The first punch 20 may have a substantially flat distal end.

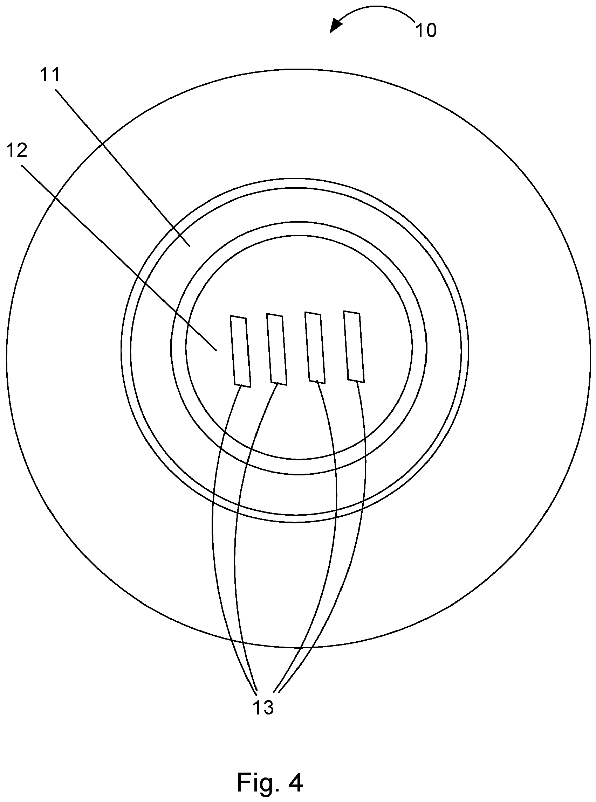

Fig. 4 shows a top view of the sintering die 10 in accordance with an embodiment. The sintering die 10 comprises an aperture wall 11 and an aperture base 12. Channels 13 are formed in the aperture base 12 and the channels 13 extend through the sintering die 10, opening to opposite sides of the sintering die 10 for receiving the first punches 20 and second punches 30 on the opposing ends. The first punch 20 comprises a common drive 21 at its proximal end, which, when inserted to the channels 13 defines the maximum extent of insertion. The common driver 21 comprises the punches secured to its distal end the punches are configured to be spaced from each other with the spacing corresponding to the spacing of the channels 13.

The second punch 30 comprises a common drive 31 at its proximal end, which, when inserted to the channels 13 defines the maximum extent of insertion of the punch 30; thus, effectively preventing e.g. overextension of the second punch 31 into the channels 13. The common drive 31 comprises the punches secured to its distal end the punches are configured to be spaced from each other with the spacing corresponding to the spacing of the channels 13

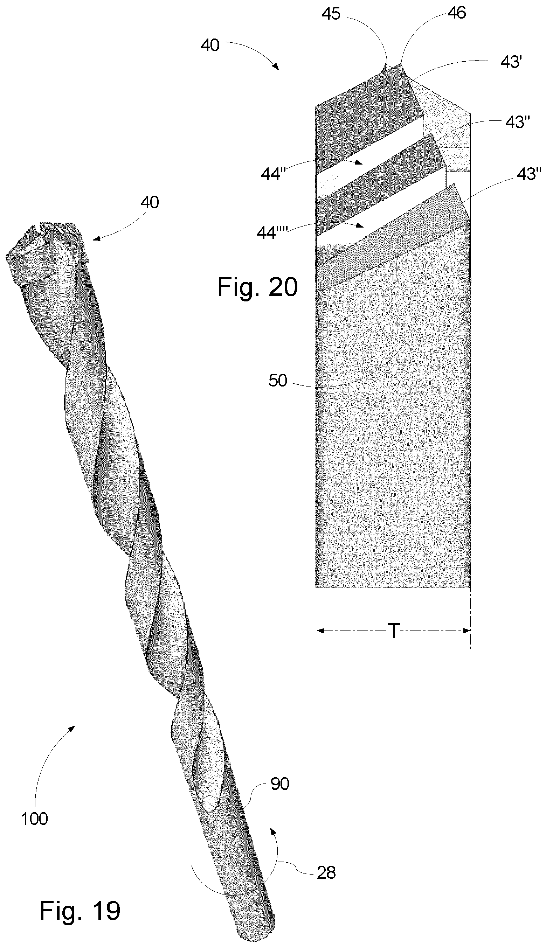

In accordance with an embodiment, Fig. 19 shows four channels 13 for receiving four punches on each side, i.e. the first punch 20 and second punch 30 are both configured to comprise four punches to be inserted.

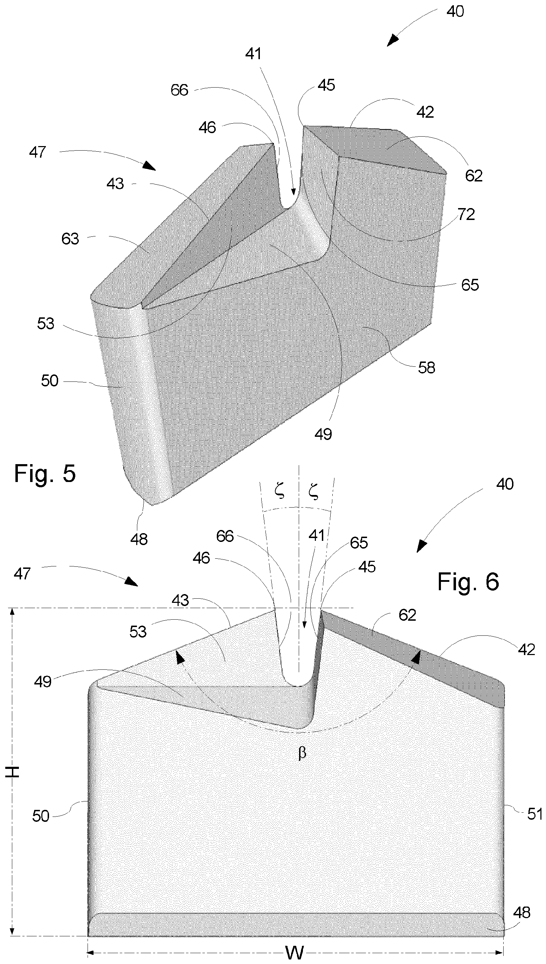

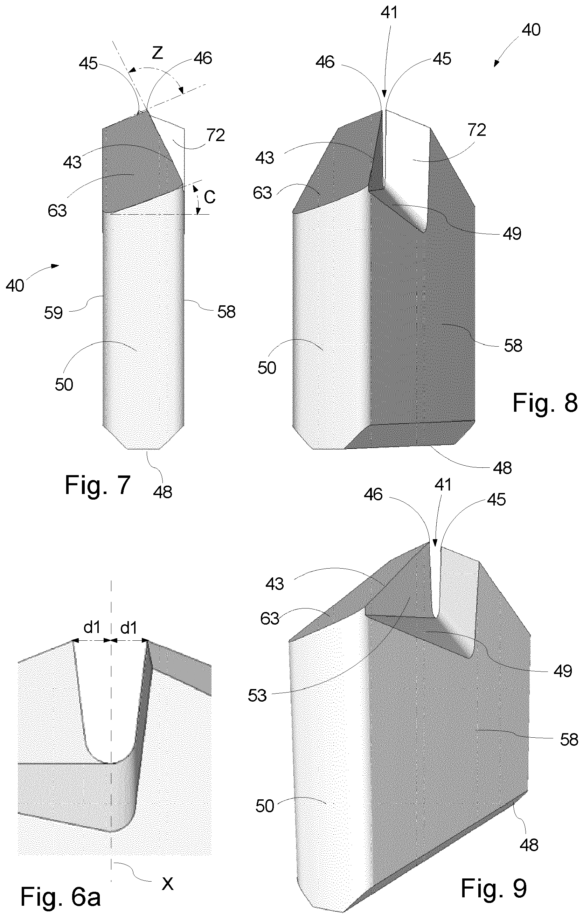

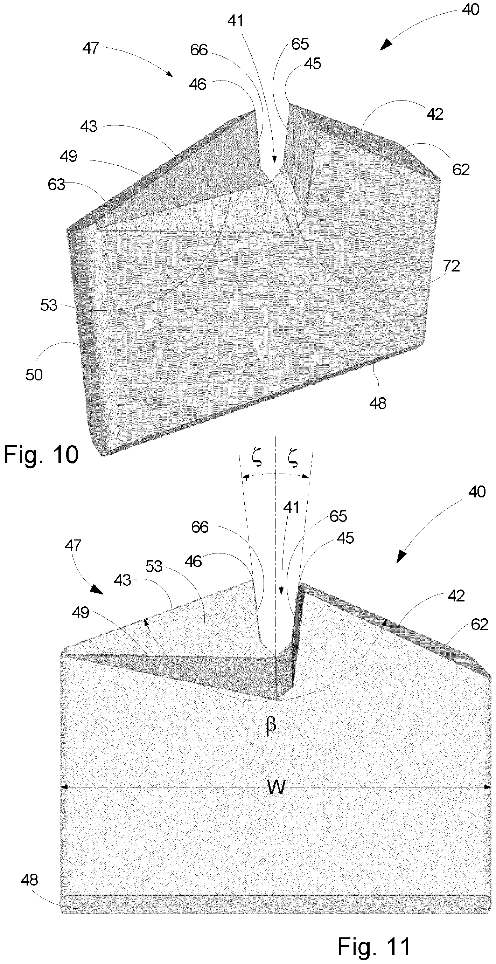

Figs. 5,6,6a and 7 to 14 shows various views of an embodiment of a drill-bit tip plate 40, and Fig. 6a shows a detail of Fig. 6. The drill-bit tip plate 40 shown in Figs. 10 and 11 is a variation of this embodiment. The drill-bit tip plate 40 may be manufactured as described above. The drill-bit tip plate 40 comprises a front end 47 and a rear end 48. The front end 47 of the tip comprises a first outer cutting edge 42 and a second outer cutting edge 43. Both the first 42 and second 43 outer cutting edges end at their inner extremity at an apex 45, 46. The first- and second apexes 45, 46 together with the first cutting edge 42 and second outer cutting edge 43 are separated by a groove 41. The groove 41 may have an arched or U-shaped bottom but other suitable configurations are also possible. The bottom of the groove 41 may be perpendicular to the axis of rotation and it may be curved or inclining (Figs. 10 & 11) or declining to each side forming a deepest point in the center. Groove 41 may have a center lying on the axis of rotation X of the drill bit plate 40. In an embodiment the groove 41 is deeper than wide.

Angle β denotes the angle between the first cutting edge 42 and the second cutting edge 43, defining the point angle of the drill-bit tip 40. The angle may be in the range of 130°± 3°, however, depending on the characteristics of the material to be drilled into, other suitable angles are possible.

The bit tip drill plate 40 has an axis of rotation X, an overall width W between first- and second short sides 50,51, and overall height H between front- and rear ends 47,48, and an overall thickness T between first- and second broad sides 58,59. A first outer relief face 62 and a first outer rake face 52 are connected to the first outer cutting edge 42. A second outer relief face 63 and a second outer rake face 53 are connected to second outer cutting edge 43.

A first inner relief face 72 and the first outer rake face 52 are connected to a first inner cutting edge 65. The first inner cutting edge 65 extends to the first apex 45. A second inner relief face 73 and the second outer rake face 53 are connected to a second inner cutting edge 66. The second inner cutting edge 66 extends to the second apex 46.

The first- and second inner cutting edges 65,66 each have an equal acute angle ζ with the axis of rotation X. The acute angle ζ is preferably between 0 and 14 degrees. Preferably, the acute angle ζ is between 4 and 10 degrees, more preferably between 6 and 8 degrees and most preferable approximately 7 degrees.

The first outer relief face 62 and the first inner relief face 72 each connect to the first broad side 58 and to one another along a first edge that extends to the first apex 45. The second outer relief face 63 and the second inner relief face 73 each connect to the second broad side 59 and to one another along a second edge that extends to the second apex 46. The first apex 45 and the second apex 46 are equally distanced from the axis of rotation X by a first distance d1 (Fig. 6a).

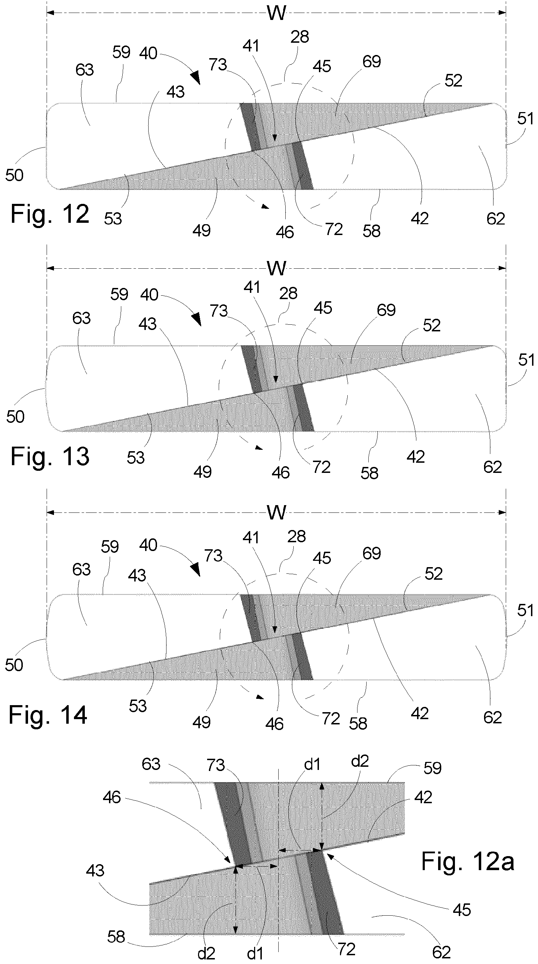

The first apex 45 is distanced from the second broad side 59 by a second distance d2 and the second apex 46 is distanced from the first broad side 58 by the second distance d2 (Fig. 12a). The second distance d2 is measured in the same direction as the extent of set thickness T or in a direction perpendicular to the first- and second broad side 58,59. Preferably, the second distance d2 is less than 75% of the thickness T, more preferably less than 66% of the thickness T, even more preferable 50% or less of the thickness T.

The first distance d1 is measured in a direction perpendicular to the first- and second side 50,51.

The first outer rake face 52 connects to a first associated release surface 49, and the first associated release surface 49 connects to the first broad side 58 to form a first recess. The first associated release surface 49 is preferably beveled, for facilitating removal of chips. The second outer rake face 53 connects to a second associated release surface 69. The second associated release surface 69 connects to the second broad side 59 to form a second recess. The second associated release surface 69 is preferably beveled for facilitating removal of chips. In the present embodiment first outer rake face 52 is parallel with the second outer rake face 53 and the first outer rake face 52 and the second outer rake face 53 coincide with one and the same plane.

The first outer cutting edge 42 and the second outer cutting edge 43 form an acute tip angle between 115 and 145 degrees, preferably between 125 and 135 degrees, most preferable approximately 130 degrees.

The first and relief surface 62 and the second and relief surface 63 have an acute cutting angle C (Fig. 7) relative to a flat plane at a right angle to the axis of rotation X of 15 to 25 degrees, preferably 18 to 22 degrees, most preferable approximately 20 degrees.

Preferably, the first, second, third and fourth cutting edges 42,43,65,66 are straight cutting edges.

The first and/or second short side 50,51 is preferably arranged at a straight angle to the broad sides 58,59. The first and/or second short side 50,51 may have a convex shape, preferably with a convexity that corresponds to the radial distance of the first- and/or second short side 50, 51 to the axis of rotation X, as shown in Figs 13 and 14.

Drill bits plates, with sharp edges where the short sides connect to the broad sides occasionally tend to drill a somewhat triangular shaped hole. This is because the radially outside cutting cuts the material at the edge of the hole and moves (walks) the short cutting edge around until it touches the outside edge of the hole. Thus, by having rounded radially outer edges, substantially perfectly round holes can be produced with ease.

The drill-bit tip plate 40 is preferably of carbide material, most preferable tungsten carbide material.

Preferably, the first edge forms an acute angle Z (Fig. 7) with the first cutting edge 42 and the second edge forming an acute angle Z with the second cutting edge 43, the acute angle Z being between 80 and 94 degrees and, preferably between 84 and 90 more preferable between 86 and 88 degrees, and most preferable approximately 87.

Preferably, the bit tip 40 has a plate like shape.

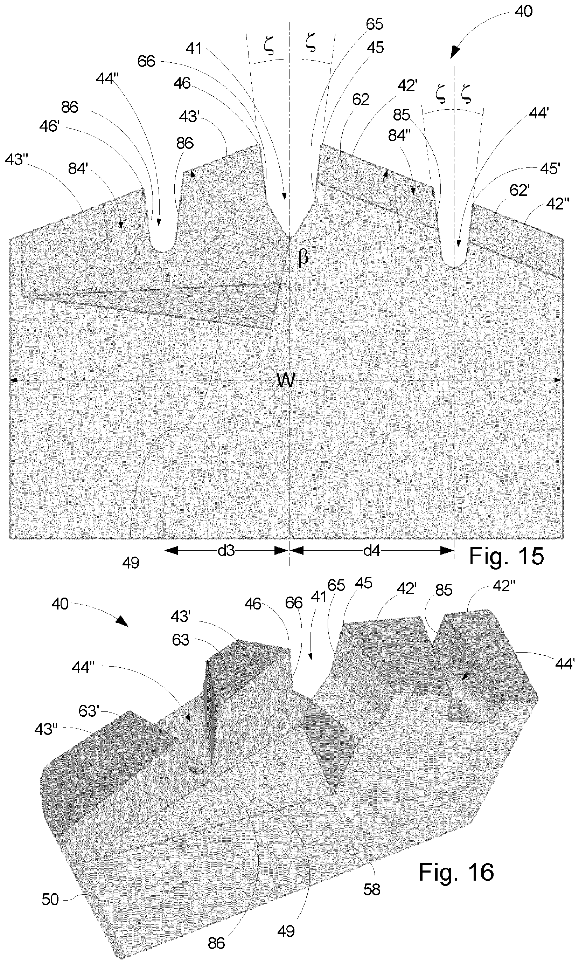

Figs. 15 to 18 show another embodiment of the drill-bit tip plate 40. In this embodiment, structures and features that are the same or similar to corresponding structures and features previously described or shown herein are denoted by the same reference numeral as previously used for simplicity.

The drill-bit tip plate 40 is provided with a first peripheral groove 44' in the first outer relief face 62. The first peripheral groove 44' extends between the first outer rake face 52 and the first broad side 58. A centerline of the first peripheral groove 44' has a third radial distance d3 to the axis of rotation X. A second peripheral groove 44' is provided in the second outer relief face 63. The second peripheral groove 44" extends between the second outer rake face 53 and the second broad side 59. A centerline of the second peripheral groove 44" has a fourth radial distance d4 to the axis of rotation X. The fourth radial distance d4 is greater than the first radial distance d3. The fourth radial distance d4 is preferably greater than the first radial distance d3 by at least amount that is greater than a greatest width of the first peripheral groove 44'.

The first peripheral groove 44' forms a first peripheral V- or U-shaped cutting edge 85 at the connection between the first peripheral groove 44' and the first rake face 52. Each of the legs of the first peripheral V-or U-shaped cutting edge 85 is preferably arranged at the acute angle ζ with the axis of rotation X. The second peripheral groove 44" forms a second peripheral V- or U-shaped cutting edge 86 at the connection between the second peripheral groove 44'4 and the second rake face 53. Each of the legs of the second peripheral V-or U-shaped cutting edge 86 is preferably arranged at the acute angle ζ with the axis of rotation X.

The first peripheral groove 44' widens in the direction from the first outer rake face 52 towards the first broad side 58, so that the sides of the groove 44' act as relief faces. The second peripheral groove 44" widens in the direction from the second outer rake face 53 towards the second broad side 59, so that the sides of the groove 44'" act as relief faces.

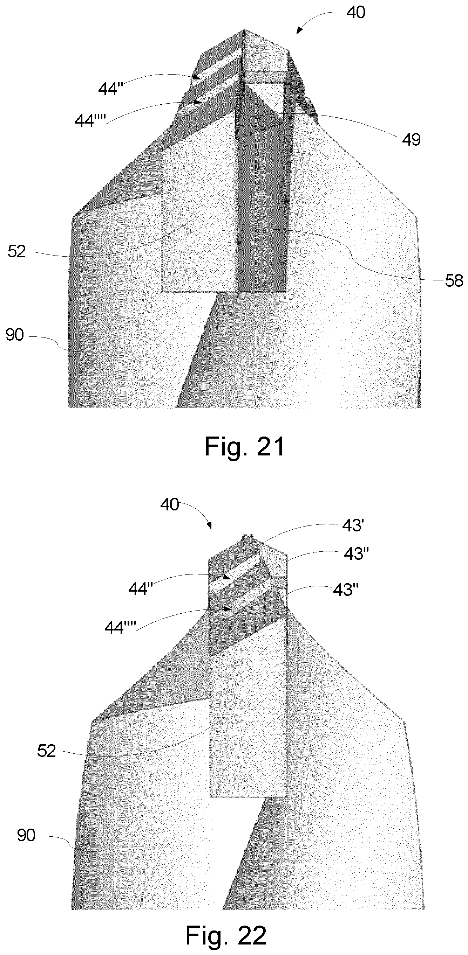

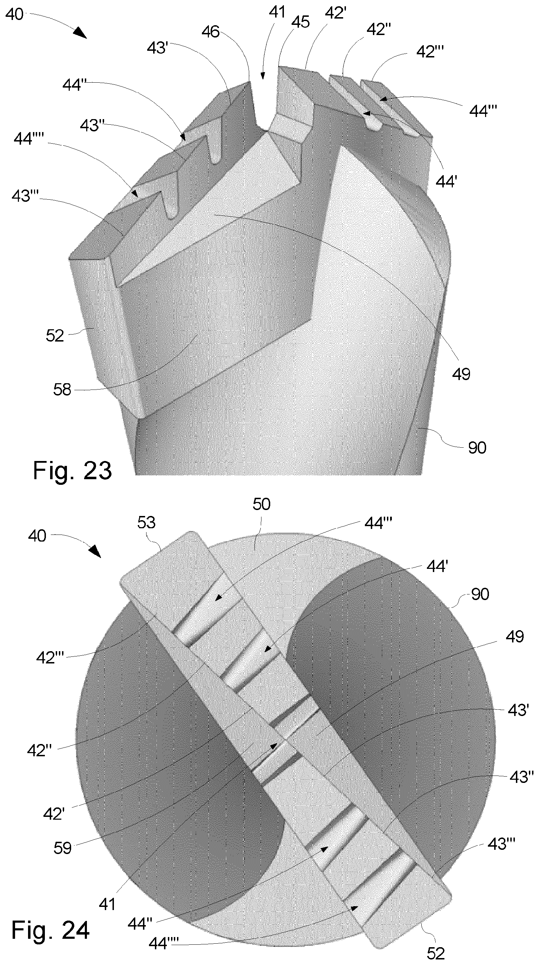

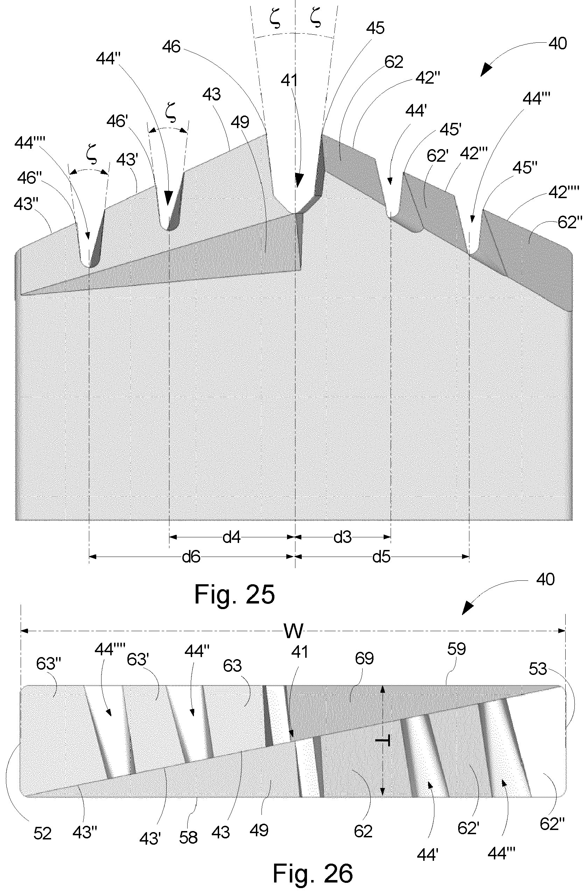

Figs. 20 to 26 show another embodiment of the drill-bit tip plate 40. Fig. 19 Shows a drill-bit 100 that is provided with the drill-bit tip plate according to Figs. 20 to 26. In this embodiment, structures and features that are the same or similar to corresponding structures and features previously described or shown herein are denoted by the same reference numeral as previously used for simplicity.

A twist drill-bit 100 according to this embodiment comprises a shank 90 with a drill-bit tip plate 40 brazed onto the tip of the shank 90. The shank comprises a spiral or twist and may be of any conventional or standard drill bit size, depending on the desired application. The shank 100 is designed to control the rate of chip removal, thus it may have a high twist rate for high feed rate applications under low spindle speeds where removal of a large volume of chips is required. The shank may also have low twist rate for high cutting speed applications and for materials which have the tendency to gall on the bit 40 or otherwise clog the hole to be drilled, such as certain metals e.g. aluminum or copper.

The drill bit plate 40 point to the present embodiment is provided with four peripheral grooves 44', 44", 44"' and 44"". The drill-bit tip plate 40 according to this embodiment has all the features of the embodiments described above, thus only the differences will be detailed here.

Peripheral grooves 44'and 44"' are positioned along the first outer cutting edge 42' peripheral grooves 44" and 44"" are positioned along the second outer cutting edges 43. Consequently, the peripheral grooves 44', 44", 44"' and 44"" define further apexes, denoted as 45',45", 46' and 46".

The distance d3 between the center of the groove 41 and the center of peripheral groove 44' is less than the distance d4 between the center of the groove 41 and the center of the peripheral groove 44" when viewed from the side. Additionally, the distance d5 between the center of the groove 41 and the center of the peripheral groove 44"' is lesser than the distance d6 between the center of the groove 41 and the center of the peripheral groove 44"" when viewed from the side. Distance d5 is also larger than the distance D4. Preferably, the difference in the distances chosen such that there is no "overlap" between the respective peripheral groves 44', 44", 44"', 44"'.

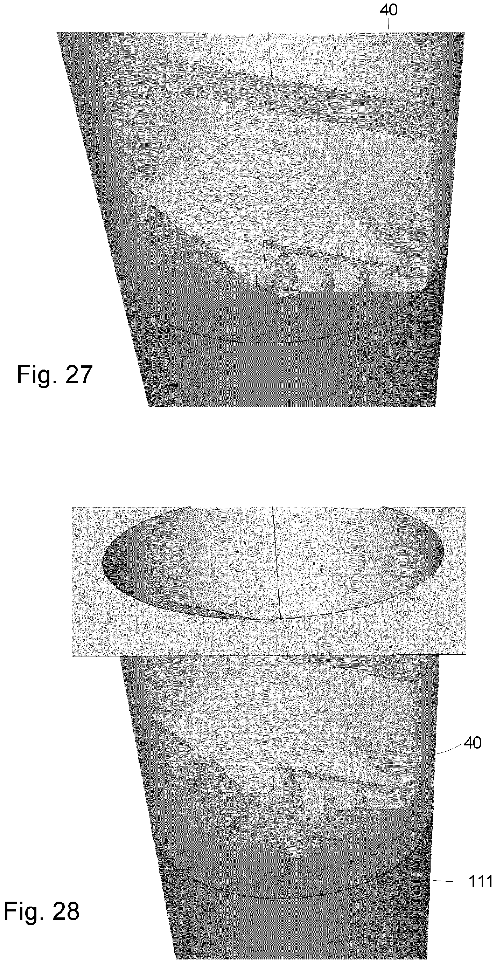

Figs. 27 and 28 illustrate a hole drilled with the drill bit 100 of the previous embodiment.

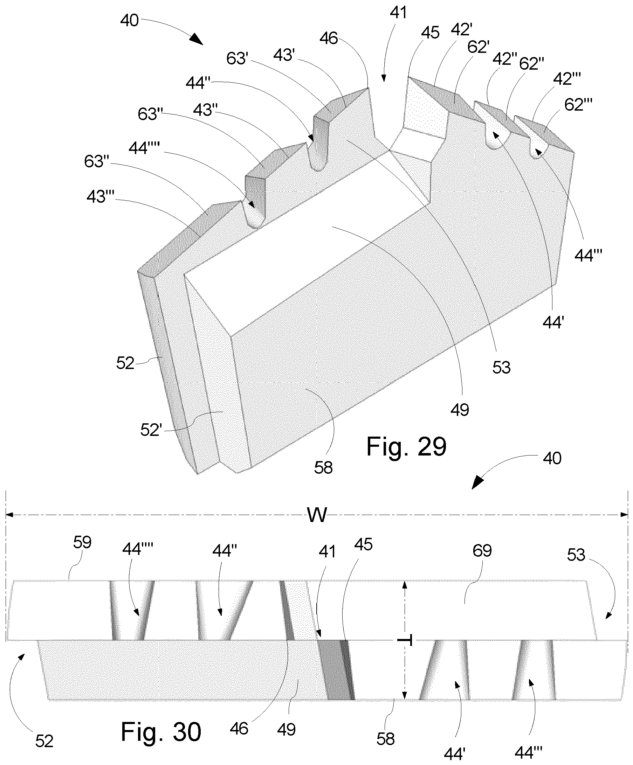

Figs. 29 and 30 show another embodiment of the drill-bit tip plate 40. In this embodiment, structures and features that are the same or similar to corresponding structures and features previously described or shown herein are denoted by the same reference numeral as previously used for simplicity.

The drill-bit tip plate 40 according to this embodiment is essentially identical to the drill-bit tip plate 40 described with reference to Figs. 20 to 26, so only the differences will be illustrated. In this embodiment, the first short side 52 and the second short side 53 are stepped, thereby creating a first retracted side 52', and a second retracted side 53'.

A comparison test was performed to compare the drill bit 100 of Fig. 19 provided with a 10mm drill-bit tip plate 40 of the embodiment of Figs. 20 to 26 with the commercially available 10 mm Bosch^{®} CYL-9 MultiConstruction Drill Bit, part nr 2 608 596 057. The drill-bit tip plate 40 was manufactured in accordance with the method described above, resulting in the sharpness of the cutting edges being in the range of 0,04 to 0,07 mm.

The test was performed in a 60 Mpa industrial tile. The force applied was 160nm (16kg). Both drill bits were rotated with 1000 RPM. The thickness of the industrial tile was 17mm and the test was performed until the industrial tile was pierced (hole depth 17). Both drill bits in the comparison test were new and unused. The Bosch blue XXX drill bit needed 256,23 seconds. The drill bit 100 of Fig. 19 provided with a 10mm drill bit to plate 40 of the embodiment of Figs. 20 to 26 needed 4,06 seconds. The speed improvement with the drill bit according to the present embodiment was a factor 63,11, i.e. a significant reduction in time needed to perform the task at hand.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality.

The reference signs used in the claims shall not be construed as limiting the scope. Unless otherwise indicated, the drawings are intended to be read (e.g., cross-hatching, arrangement of parts, proportion, degree, etc.) together with the specification, and are to be considered a portion of the entire written description of this disclosure. As used in the description, the terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or axis of rotation, as appropriate.

## Claims

1. A method for manufacturing a bit tip blank (40') for forming the tip of the body of a drill bit, wherein the bit tip blank (40') comprises a front end (47) and a rear end (48), said front end forming the cutting edge (42), the method comprising:
- providing a mold (1), said mold (1) comprising a first punch (20), a second punch (30) and a sintering die (10),
said die (10) having a channel (13) with a cross-sectional shape that corresponds to the cross sectional shape of said first punch (20) and second punch (30),
said channel (13) extending through said die (10) and said channel (13) opening to opposite sides of said die (10), said second punch (30) having a distal end (35) corresponding to a negative shape of the tip front end (47),
said first punch (20) having a distal end that corresponds to the negative shape of the tip rear end (48),
- inserting either said first punch (20) or said second punch (30) partially into said channel (13),
- providing an amount of sintering powder (60) to be compacted in said channel (13) of said die (10),
thereupon inserting the other of said first punch (20) and said second punch (30) partially into said channel (13),
- thereupon applying a force to said first punch (20) and said second punch (30) urging both said first punch (20) and said second punch (30) towards one another to apply pressure to the sintering powder (60) therebetween to densify said sintering powder (60) to form a said bit tip blank (40'), and
- thereupon ejecting said bit tip blank (40') blank from said die (10) by pushing said second punch (30) into said channel (13) at least until said bit tip blank (40') is ejected from said channel (13).

2. The method according to claim 1, comprising retracting said first punch (20) before or during the ejection of said bit tip (40) and/or comprising heating the bit tip blank (40'), for sintering said bit tip blank (40') to thereby obtain a bit tip (40), and/or comprising applying pressure on said first punch (20) and said second punch (30) using a hydraulic actuator and/or comprising liquid phase sintering, and/or electric current assisted sintering..

3. The method according to claim 1 or 2, wherein said second punch (30) has a longitudinal extent (L) that is greater than a longitudinal extent (l) of said channel (13), and/or, wherein said cutting edge (42) of said bit tip blank (40') comprises at least one groove (41) and/or wherein said sintering powder (60) comprises tungsten carbide powder and/or wherein the sintering powder comprise a mixture comprising tungsten oxide powder and carbon power and /or wherein the die (10) comprises at least one cavity, which at least one cavity is formed in said channel (13) between the distal end of said first punch (20) and the distal end of said second punch (30) and/or wherein the second punch (30) has a length (L) that exceeds the length of said channel (13) and /or wherein the distal end of the second punch (30) comprises at least one groove (38) and at least one ridge (37) .

4. A bit tip blank (40') or a bit tip (40) obtained by the method according to any one of the preceding claims.

5. A mold (1) for manufacturing a bit tip blank (40') for a drill bit (50), wherein the bit tip blank (40') comprises a front end (47) and a rear end (48), said front end (47) forming the cutting edge (42),
said mold (1) comprising a first punch (20), a second punch (30) and a sintering die (10),
said die (10) comprising in a channel (13) with a cross-sectional shape that corresponds to the cross sectional shape of said first- and second punch (20,30)
and has a longitudinal extend (1),
said channel (13) extending through said sintering die (10) and said channel (13) opening to opposite sides of said sintering die (10), said second punch (30) having a distal end corresponding to a negative shape of the tip front end (47) of the tip bit blank (40'),
said first punch (20) having a distal end that corresponds to the negative shape of the tip rear end (48) tip bit blank (40'),
**characterized in that** said second punch (30) has a longitudinal extent (L) that is greater than said longitudinal extent (l) of said channel (13).

6. A sintering mold according to claim 14, wherein said die (10) comprises a plurality of channels (13) for receiving a corresponding plurality of pairs of first (20) and second (30) punches and/or wherein the cross-sectional shape of the first and second punches (20,30) corresponds to the cross-sectional shape of the tip bit blank (40').

7. A drill-bit tip plate (40) for mounting on the shank (90) of a twist drill bit (100), said bit tip drill plate (40) having an axis of rotation (X), an overall width (W) between first- and second short sides (50,51), and overall height (H) between front- and rear ends (47,48), and an overall thickness (T) between first- and second broad sides (58,59), said bit tip drill plate (40) comprises:
a first outer relief face (62) and a first outer rake face (52) connected to a first outer cutting edge (42), said first outer cutting edge (42) extends to a first apex (45),
a second outer relief face (63) and a second outer rake face (53) connected to second outer cutting edge (43), said second outer cutting edge (43) extends to a second apex (46),
a first inner relief face (72) and said first outer rake face (52) connected to a first inner cutting edge (65), said first inner cutting edge (65) extends to said first apex (45), and
a second inner relief face (73) and said second outer rake face (53) connected to a second inner cutting edge (66), said second inner cutting edge (66) extends to said second apex (46) ,
said first- and second inner cutting edges (65,66) each having an equal acute angle (ζ) with said axis of rotation (X), said acute angle (ζ) being between 0 and 14 degrees,
said first outer relief face (62) and said first inner relief face (72) each connecting to said first broad side (58) and to one another along a first edge that extends to said first apex (45),
said second outer relief face (63) and said second inner relief face (73) each connecting to said second broad side (59) and to one another along a second edge that extends to said second apex (46),
said first apex (45) and said second apex (46) being equally distanced from said axis of rotation (X) by a first distance (d1),
wherein said first apex (45) is distanced from said second broad side (59) by a second distance (d2) and said second apex (46) is distanced from said first broad side (58) by said second distance (d2).

8. The drill-bit tip plate (40) according to claim 7, wherein said acute angle (ζ) is between 4 and 10 degrees, preferably between 6 and 8 degrees and most preferable approximately 7 degrees.

9. The drill-bit tip plate (40) according to claim 7 or 8, wherein said first outer rake face (52) connects to a first associated release surface (49), and wherein the first associated release surface (49) connects to the first broad side (58) to form a first recess, the first associated release surface (49) preferably being beveled, and wherein said second outer rake face (53) connects to a second associated release surface (69), and wherein the second associated release surface (69) connects to the second broad side (59) to form a second recess, the second associated release surface (69) preferably being beveled, said first outer rake face (52) preferably being parallel with said second outer rake face (53), said first outer rake face (52) and said second outer rake face (53) even more preferable coinciding with one and the same plane.

10. The drill-bit tip plate (40) according to any one preceding claim 7 to 9, wherein said first outer cutting edge (42) and said second outer cutting edge (43), form an acute tip angle between 115 and 145 degrees, preferably between 125 and 135 degrees, most preferable approximately 130 degrees.

11. The drill-bit tip plate (40) according to any one of claims 7 to 11, comprising
a first peripheral groove (44') in the first outer relief face (62) said first peripheral groove (44') extending between the first outer rake face (52) and the first broad side (58), a centerline of the first peripheral groove (44') having a third radial distance (d3) to the axis of rotation (X),
a second peripheral groove (44') in the second outer relief face (63) said second peripheral groove (44") extending between the second outer rake face (53) and the second broad side (59), a centerline of the second peripheral groove (44") having a fourth radial distance (d4) to the axis of rotation (X), said fourth radial distance (d4) being greater than said first radial distance (d3), said fourth radial distance (d4) preferably being greater than said first radial distance (d3) by at least amount that is greater than a greatest width of the first peripheral groove (44').

12. The drill-bit tip plate (40) according to claim 11, wherein said first peripheral groove (44') forms a first peripheral V- or U-shaped cutting edge (85) at the connection between the first peripheral groove (44') and the first rake face (52), each of the legs of the first peripheral V-or U-shaped cutting edge (85) preferably being arranged at said acute angle (ζ) with said axis of rotation (X), and
wherein said second peripheral groove (44") forms a second peripheral V- or U-shaped cutting edge (86) at the connection between the second peripheral groove (44'4) and the second rake face (53),each of the legs of the second peripheral V- or U-shaped cutting edge (86) preferably being arranged at said acute angle (ζ) with said axis of rotation (X), said first peripheral groove (44') preferably widening in the direction from the first outer rake face (52) towards the first broad side (58).

13. The drill-bit tip plate (40) according to any one of claim 7 to 12, wherein said first and/or second short side (50,51) has a convex shape, preferably with a convexity that corresponds to the radial distance of the first- and/or second short side (50, 51) to said axis of rotation (X).

14. The drill-bit tip plate (40) according to any one of claim 7 to 13, wherein said first edge forms an acute angle (Z) with said first cutting edge (42) and said second edge forms an acute angle (Z) with said second cutting edge (43), said acute angle (Z) being between 80 and 94 degrees and, preferably between 84 and 90 more preferable between 86 and 88 degrees, and most preferable approximately 87 degrees.

15. A twist drill-bit (100) comprising a drill-bit tip plate (40) according to any one of claims 7 to 14, preferably comprising a shank (90) with said drill-bit tip plate (40) brazed onto the tip of the shank (90).
